# EUROPÄISCHE PATENTSCHRIFT

(11) **EP 1 561 371 B1**
(45) Veröffentlichungstag und Bekanntmachung des Hinweises auf die Patenterteilung: **23.04.2008**
(21) Anmeldenummer: 05100556.9
(22) Anmeldetag: 28.01.2005
(51) Int. Cl.: A01C 7/20

(54) **Kombination aus einer Schutzeinrichtung und einem Rahmenteil**
Combination of a protective device and a frame member
Combination de un dispositif de protection et un élément de châssis

(30) Priorität: 31.01.2004 US 769474
(43) Veröffentlichungstag der Anmeldung: 10.08.2005
(73) Patentinhaber: DEERE & COMPANY, Moline, Illinois 61265-8098 (US)
(72) Erfinder: Frasier, Michael Eugene, 61244, East Moline (US)
(74) Vertreter: Holst, Sönke

(56) Entgegenhaltungen:
- US-A- 5 664 507
- US-A1- 2002 166 486
- US-B1- 6 209 466

## Beschreibung

Die Erfindung betrifft eine Kombination aus einer Schutzeinrichtung für eine Saatgutleitung zum Führen der Saatgutleitung durch eine Säfurche und einem Rahmenteil, welcher an eine Sämaschine montierbar ist, wobei die Schutzeinrichtung einen Körper zum Abschirmen der Saatgutleitung und eine erste Verbindungseinrichtung zum Montieren der Schutzeinrichtung an den Rahmenteil aufweist, wobei der Rahmenteil eine zweite Verbindungseinrichtung aufweist und wobei die erste und die zweite Verbindungseinrichtung miteinander in Eingriff bringbar sind.

Reihensämaschinen weisen üblicherweise einen quer verlaufenden Werkzeugträger auf, welcher mit mehreren sich rückwärts erstreckenden Säeinheiten bestückt ist. Diese Einheiten weisen einen Rahmen auf, an den ein Furchenöffner zum Ausformen einer Säfurche auf einem Saatbeet montiert ist. Der Furchenöffner kann zum Einstellen der Furchentiefe mit Tiefeneinstellrädern versehen sein. Um das Saatgut in eine Dosiervorrichtung zu führen, kann ein Saatgutbehälter an den Rahmen montiert sein. Die Dosiervorrichtung verteilt das Saatgut und leitet es durch eine Saatgutleitung in die durch den Furchenöffner ausgeformte Säfurche. Der Saatgutleitung und dem Furchenöffner folgen Schließräder.

Die US 2002/166486 A1 offenbart eine Sämaschine mit einem Einscheiben-Furchenöffner. Der Einscheiben-Furchenöffner ist mit einer Schabeeinrichtung versehen, die die Furchenöffnerscheibe reinigt und fest haftendes Erdreich entfernt. Die Schabeeinrichtung ist an einem Rahmenteil montiert und erstreckt sich seitlich von einer am Furchenöffner angeordneten Saatgutleitung, derart, dass die Saatgutleitung des Furchenöffners durch die Schabeeinrichtung nach außen hin abgedeckt bzw. geschützt wird. Diese auch als Schutzeinrichtung fungierende Schabeeinrichtung ist zum Schutz einer Saatgutleitung eines Doppelscheiben-Furchenöffners ungeeignet, da sie die Saatgutleitung nur einseitig schützen würde und beispielsweise der Schutz gegen ein Schleifen an der Furchenöffnerscheibe nicht gegeben ist. Ferner weist die als Schabeeinrichtung ausgebildete Schutzeinrichtung keine Führungseigenschaften auf, die eine Saatgutleitung mittig zu der von einem Doppelscheiben-Furchenöffner ausgebildeten Saatgutfurche führen würde.

In einer bekannten Ausführung einer Sämaschine umfasst der Furchenöffner eine Doppelscheiben-Anordnung. Die Saatgutleitung ist dabei zwischen den Doppelscheiben angeordnet. Vor der Saatgutleitung und wiederum zwischen den Doppelscheiben des Furchenöffners ist eine ein Metallteil aufweisende Schutzeinrichtung für die Saatgutleitung angeordnet. Saatgutschläuche sind üblicherweise aus Kunststoff gefertigt. Wenn eine Saatgutleitung nicht richtig durch die Schutzeinrichtung abgegrenzt wird, kann dieser sich zur Seite bewegen und an den rotierenden Scheiben schleifen. Die Scheiben können dabei ein Loch in die Saatgutleitung schleifen.

In der US 5,664,507 wird eine aus Kunststoff gefertigte Führung für eine Saatgutleitung offenbart, um die Saatgutleitung in der Mitte der Säfurche zwischen den Doppelscheiben-Furchenöffner zu halten. Die Führung umfasst einen einteiligen Teil mit rechten und linken sich in Vorwärtsrichtung erstreckenden Montierplatten zur Verbindung mit einer Schutzeinrichtung für eine Saatgutleitung. Jede der Montierplatten ist mit einer Aussparung versehen, in der ein sich quer erstreckender Vorsprung der Schutzeinrichtung der Saatgutleitung aufgenommen wird. Rückwärtig erstrecken sich ein linkes und rechtes Führungselement zum Greifen und Zentrieren der Saatgutleitung in der Säfurche. Die Schutzeinrichtung der Saatgutleitung ist mit einem Rahmenteil der Sämaschine mittels eines Achsbolzens verbunden. Derartige Schutzeinrichtungen können schwer zu montieren und zu warten sein. Andere Ausführungen von Schutzeinrichtungen sind mittels Verschraubungen steif angeschlossen und erlauben kein seitliches Spiel der Führung.

Die der Erfindung zu Grunde liegende Aufgabe wird darin gesehen, eine Schutzeinrichtung zu schaffen, welche wirtschaftlich herzustellen, einfach zu montieren und zu warten ist, während notwendige Betriebsmerkmale, wie seitliches Spiel, beibehalten werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine Kombination der eingangs genannten Art derart ausgebildet, dass eine der beiden Verbindungseinrichtungen ein Anschlussjoch mit einer vorderen und einer hinteren Lagerstelle aufweist. Die vordere Lagerstelle weist eine erste kreisförmige Öffnung und die hintere Lagerstelle eine zweite kreisförmige Öffnung mit einer Aussparung auf. Die Aussparung ist in einem Winkel zur Vertikalen angeordnet. Die entsprechende andere der ersten und zweiten Verbindungseinrichtung weist einen über einen Steg befestigten Anschlussbolzen auf. Der Anschlussbolzen ist derart bemessen, dass er zwischen und durch die erste und zweite kreisförmige Öffnung einfügbar ist, wobei der Steg eine Dicke aufweist, die kleiner als die Breite der Aussparung ist, so dass dieser zur Montage durch die Aussparung geführt werden kann und in der Länge derart bemessen ist, dass er zwischen die vordere und hintere Lagerstelle einfügbar ist.

Die Erfindung bietet durch eine leichte Verriegelungsverbindung ein simples Anschließen der Schutzeinrichtung der Saatgutleitung. Vorzugsweise kann die Verbindung ohne Verwendung von Befestigungsmitteln oder zusätzlichen Befestigungsteilen oder Werkzeug hergestellt werden.

Die Schutzeinrichtung der Saatgutleitung umfasst einen Körper zum Abschirmen oder Schützen der Saatgutleitung, eine erste Verbindungseinrichtung zum Montieren der Schutzeinrichtung an den Rahmenteil und einen Aufnahmeteil zum Halten der Saatgutleitung hinter dem Körper. Der Rahmenteil umfasst eine zweite Verbindungseinrichtung, wobei die erste und die zweite Verbindungseinrichtung miteinander in Eingriff bringbar sind.

Vorzugsweise weist die erste Verbindungseinrichtung das Anschlussjoch und die zweite Verbindungseinrichtung den Anschlussbolzen und den Steg auf.

Der Winkel, in dem die Aussparung angeordnet ist, sollte größer sein als eine freie Schwenkbewegung der Schutzeinrichtung, wobei die freie Schwenkbewegung der Schutzeinrichtung durch angrenzende Bauteile der Sämaschine begrenzt wird.

Vorzugsweise ist die Schutzeinrichtung aus Stahl und der Rahmenteil aus Eisen gefertigt. Entsprechend der bevorzugten Ausführungsform der Erfindung kann die Schutzeinrichtung für die Saatgutleitung als durchgehärtetes Stahlfeingussteil und der Rahmenteil als duktiles Eisenteil ausgebildet sein.

Durch Verwendung der Scheiben des Furchenöffners zur Halterung der Schutzeinrichtung werden bei der vorliegenden Erfindung dafür keine zusätzlichen Bauteile benötigt. Bei vollständiger Installation sind die Scheiben des Furchenöffners neben den gegenüberliegenden Seitenflächen der Schutzeinrichtung angeordnet und dienen dazu, in Kombination mit den miteinander in Eingriff bringbaren Verbindungseinrichtungen, die Schutzeinrichtung zu halten. Die Schutzeinrichtung für die Saatgutleitung kann ohne Werkzeug oder Befestigungselemente installiert werden. Die Installationsanordnung der Schutzeinrichtung für die Saatgutleitung liefert den notwendigen Bedarf an Spiel innerhalb der Säfurche.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine rechte Seitenansicht einer Reihensäeinheit,
- Fig. 2: eine vergrößerte linke Seitenansicht einer Schutzeinrichtung für eine Saatgutleitung der Reihensäeinheit aus Figur 1,
- Fig. 3: eine hintere Seitenansicht der Schutzeinrichtung für eine Saatgutleitung aus Figur 2,
- Fig. 4: eine hintere perspektivische Ansicht der Schutzeinrichtung für eine Saatgutleitung aus Figur 2,
- Fig. 5: eine Einzelteildarstellung der linken Seitenansicht der Schutzeinrichtung für eine Saatgutleitung aus Figur 2,
- Fig. 6: eine linke Seitenansicht der Schutzeinrichtung für eine Saatgutleitung aus Figur 2 in einem vollständig installierten und verriegelten Zustand,
- Fig. 7: eine hintere Seitenansicht der Schutzeinrichtung für eine Saatgutleitung aus Figur 5,
- Fig. 8: eine hintere Seitenansicht der Schutzeinrichtung für eine Saatgutleitung aus Figur 6 und
- Fig. 9: eine schematische Ansicht der Schutzeinrichtung für eine Saatgutleitung aus Figur 8, in der der Bereich einer seitlichen Schwimmbewegung bei Betrieb demonstriert ist.

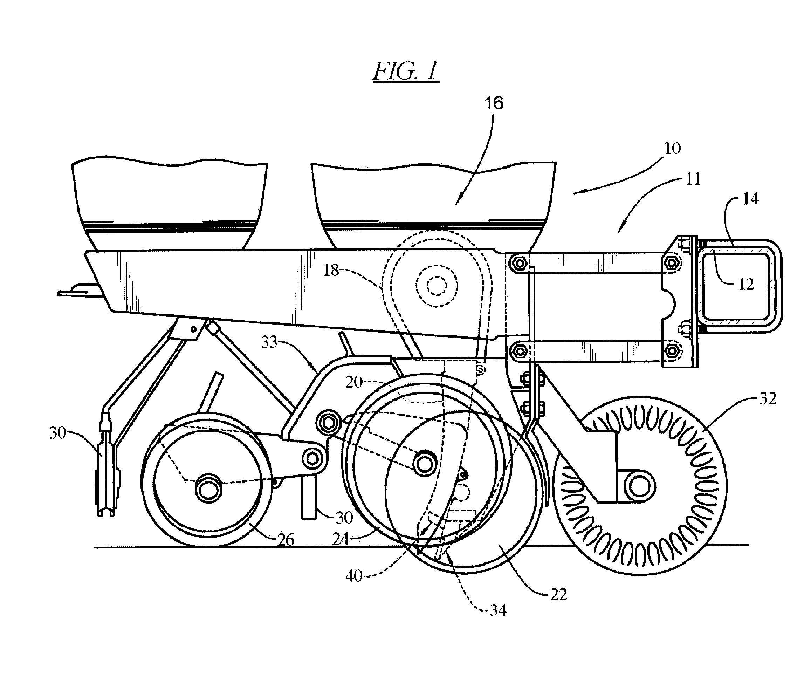

Figur 1 zeigt eine landwirtschaftliche Säeinheit 10. Die Säeinheit 10 ist mit einem Parallelogrammgestänge 11 versehen, welches an einen quer zur Fahrtrichtung verlaufenden Werkzeugträger 12 auf übliche Weise mittels U-Bolzen 14 befestigt ist. Die Säeinheit 10 ist mit einem Saatgutbehälter 16 versehen, welcher Saatgut an eine Dosiervorrichtung 18 leitet. Die Dosiervorrichtung 18 leitet das dosierte Saatgut in eine Saatgutleitung 20, um das Saatgut in einer Säfurche zu platzieren. Die Säfurche wird durch einen Furchenöffner 22 ausgebildet. Tiefeneinstellräder 24 steuern die Tiefe des Furchenöffners 22. Ein Paar von Schließrädern 26 schließen die Furche nachdem das Saatgut durch die Saatgut leitung 20 in der Furche deponiert wurde. Die dargstellte Säeinheit 10 ist auch mit einem Pflanzenschutzmittelbehälter 28 versehen, um Pflanzenschutzmittel durch Ausbringeinheiten 30 auf den Boden auszubringen. Eine geeignete Dosiervorrichtung (nicht gezeigt) für Pflanzenschutzmittel steuert die Ausbringmenge an Pflanzenschutzmittel. Des Weiteren ist vor dem Furchenöffner 22 ein Scheibensech 32 angeordnet, um die Öffnung der Säfurche zu erleichtern. Alle diese Elemente sind an einen Rahmen 33 der Säeinheit 10 montiert.

Die oben beschriebene Säeinheit 10 ist in einer relativ herkömmlichen Weise konfiguriert. Üblicherweise sind mehrere Säeinheiten an den Werkzeugträger 12 montiert, so dass ein Landwirt mehrere Reihen gleichzeitig in einem einzigen Arbeitsgang über das Feld bearbeiten kann. Auch wenn die vorliegende Erfindung wie beschrieben an einer Reihensäeinheit 10 montiert ist, ist es denkbar, diese auch an anderen Bodenbearbeitungsmaschinen, wie z.B. Getreide-Sämaschinen und dergleichen, zu montieren. Die Erfindung ist nicht auf Reihensäeinheiten beschränkt.

Der Rahmen 33 der Säeinheit ist mit einer sich nach unten erstreckenden Schutzeinrichtung 34 für eine Saatgutleitung 20 versehen. Diese Schutzeinrichtung 34 ist unmittelbar vor der Saatgutleitung 20 positioniert, um die Saatgutleitung vor einem Kontakt mit der Säfurche in Fahrtrichtung zu schützen. Die Schutzeinrichtung 34 ist mit sich quer zur Fahrtrichtung erstreckenden Vorsprüngen 36 versehen.

Die Schutzeinrichtung 34 umfasst einen Führungsteil 40 mit rechten und linken Führungselementen 46, 48, die die aus Plastik gefertigte Saatgutleitung 20 auf die Mittellinie der Säfurche ausrichten. Das sorgt für eine bessere Saatgutplatzierung und verhindert den Verschleiß der Saatgutleitung 20 durch die Scheiben des Furchenöffners 22. Auch wenn die dargestellte Erfindung den Führungsteil 40 als einheitliches Teil der Schutzeinrichtung 34 zeigt, kann auch ein separat ausgebildetes Führungsteil eingesetzt werden, wie es beispielsweise in der US 5,664,507 A offenbart ist, welche hiermit als Referenz einbezogen wird.

Die Führungselemente 46, 48 können mit Öffnungen 46a, 48a versehen sein, welche dazu genutzt werden könnten, um die Saatgutleitung 20 durch eine Querverstrebung zu halten, wie es in der US 5,826,524 A, US 5,724,903 A, US 5,092,255 A sowie in der US 6,209,466 A beschrieben ist, welche hiermit als Referenz einbezogen werden, oder um an der Saatgutleitung 20 ausgebildete Knöpfe oder Vorsprünge aufzunehmen.

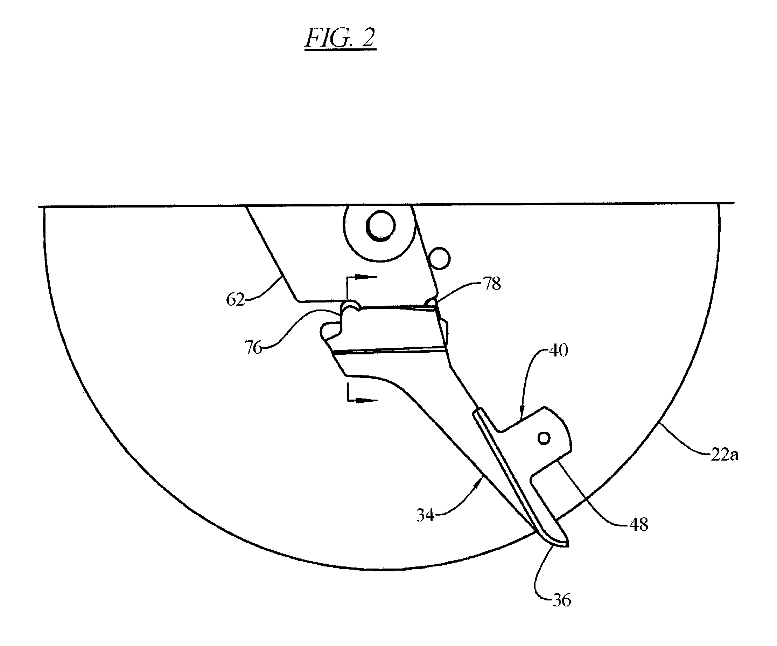

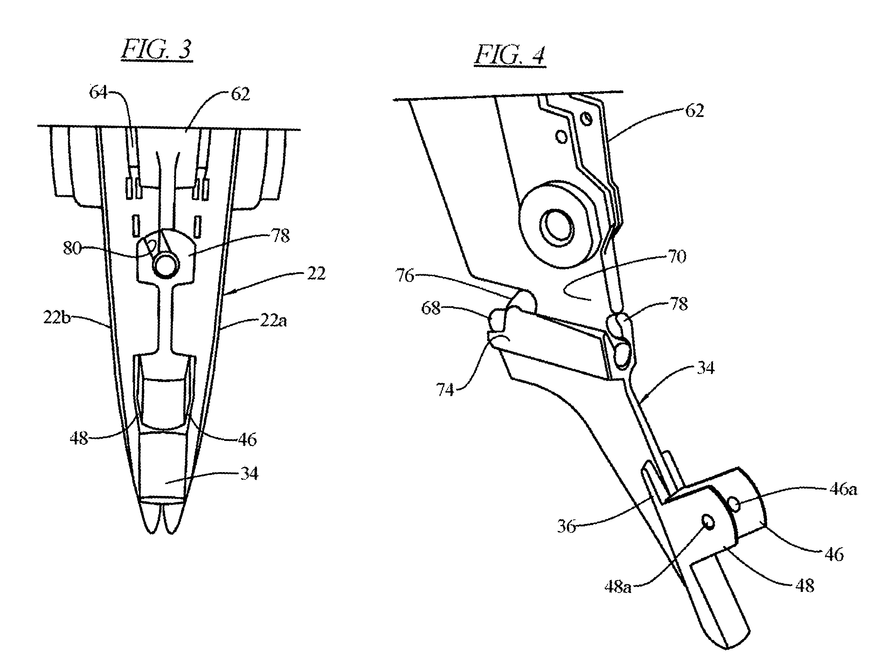

Die Figuren 2 und 3 zeigen eine erfindungsgemäße Schutzeinrichtung 34. Die Schutzeinrichtung 34 wird durch ein Montage- oder Rahmenteil 62 getragen, welcher zwischen den Scheiben 22a, 22b des Doppelscheiben-Furchenöffners 22 an einer Achse 64 aufgehängt ist.

Figur 4 zeigt die an dem Rahmenteil 62 montierte Schutzeinrichtung 34. Der Rahmenteil weist einen Montagebolzen 68 auf, der durch einen Steg 70 getragen wird. Der Montagebolzen 68 und der Steg 70 können zusammen mit den übrigen Teilen des Rahmenteils 62 einheitlich ausgebildet sein. Entsprechend einer bevorzugten Ausbildung der Erfindung ist der Rahmenteil 62 als einzelnes, duktiles Eisenteil ausgebildet.

Die Schutzeinrichtung 34 umfasst ein Anschlussjoch 74. Das Anschlussjoch 74 kann zusammen mit den übrigen Teilen der Schutzeinrichtung 34 als einheitliches Teil ausgebildet sein. Das Anschlussjoch 74 umfasst eine vordere Lagerstelle 76 und eine hintere Lagerstelle 78. Die hintere Lagerstelle 78 weist eine Aussparung 80 auf, welche etwas breiter ausgebildet ist, als der Steg 70 des Rahmenteils 62, jedoch in einem Winkel zur Vertikalen angeordnet ist.

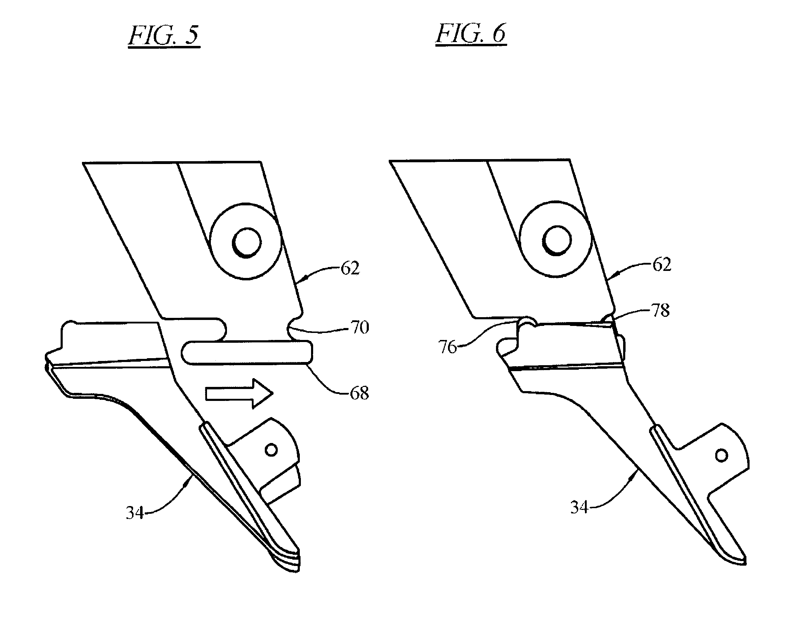

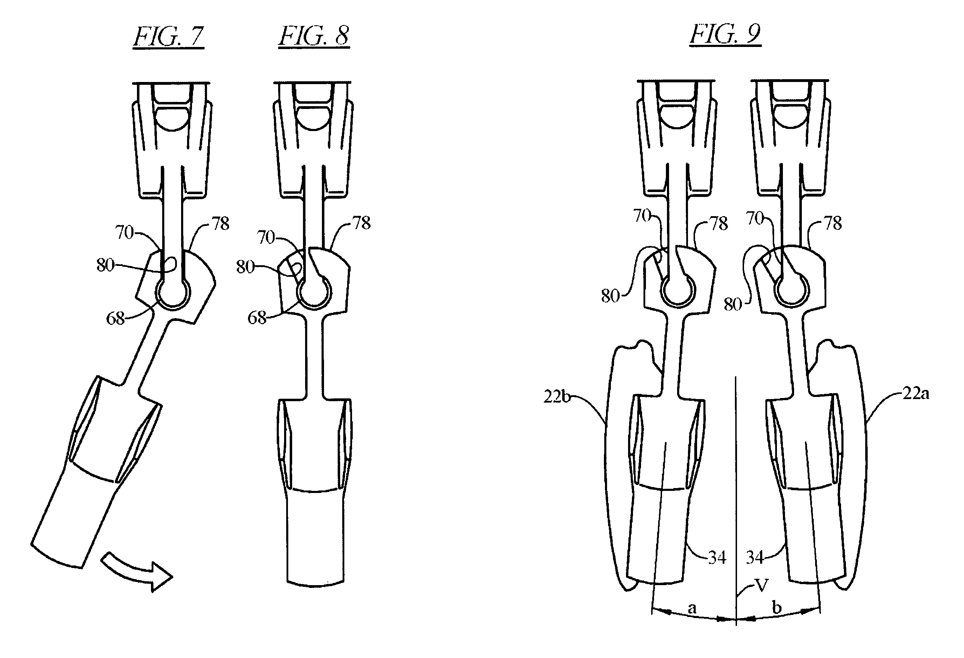

Die Figuren 5 bis 8 zeigen das Zusammenfügen des Rahmenteils 62 mit der Schutzeinrichtung 34. Die Schutzeinrichtung 34 wird geneigt (Figur 7) und der Länge nach auf den Anschlussbolzen 68 geschoben (Figur 5), wobei der Steg 70 durch die Aussparung 80 geführt und entgegen der Fahrtrichtung geschoben wird, bis der Steg 70 gegen die vordere Lagerstelle 76 stößt (Figur 6). Die Schutzeinrichtung 34 wird dann verschwenkt, um in die vertikale Position zurückzugelangen (Figur 8), wobei der Steg 70 nicht länger im Eingriff mit der Aussparung 80 steht.

Während des Betriebes kann die Schutzeinrichtung innerhalb der beiden Winkel "a", "b" zur Vertikalen schwenken bzw. seitlich schwimmen, wie in Figur 9 dargestellt ist. Um die Grenzen der Schwenkbewegung darzustellen sind zwei Schutzeinrichtungen 34 in Figur 9 dargstellt, wobei im Realfall selbstverständlich nur eine Schutzeinrichtung 34 zwischen den Scheiben 22a, 22b montiert wird, wie es in Figur 3 dargstellt ist. Aufgrund der dichten Anordnung der Scheiben 22a, 22b kann die Schutzeinrichtung 34 nicht in dem Maße verschwenkt werden, dass der Steg 70 in die Aussparung 80 gelangt. Somit kann die Schutzeinrichtung 34 nicht von dem Rahmenteil 62 entfernt werden, ohne dass zunächst eine der Scheiben 22a, 22b entfernt wird.

Die erfindungsgemäße Schutzeinrichtung 34 ist vorteilhafter Weise aus einem einzigen Stück gefertigt und derart angepasst ausgebildet, dass es mit dem Montage- oder Rahmenteil 62 zusammen in Eingriff bringbar bzw. verriegelbar ist. Es werden keine Befestigungen, separate Befestigungsteile oder Werkzeuge benötigt, um die Schutzeinrichtung an die Säeinheit zu bauen. Durch die Erfindung wird eine Reduzierung der Rüstzeit und der Ausrüstungskosten erzielt.

## Patentansprüche

1. Kombination aus einer Schutzeinrichtung (34) für eine Saatgutleitung (20) zum Führen der Saatgutleitung (20) durch eine Säfurche und einem Rahmenteil (62), welcher an eine Sämaschine (10) montierbar ist, wobei die Schutzeinrichtung (34) einen Körper zum Abschirmen der Saatgutleitung (20) und eine erste Verbindungseinrichtung zum Montieren der Schutzeinrichtung (34) an den Rahmenteil (62) aufweist, wobei der Rahmenteil (62) eine zweite Verbindungseinrichtung aufweist und wobei die erste und die zweite Verbindungseinrichtung miteinander in Eingriff bringbar sind, **dadurch gekennzeichnet, dass** eine der ersten oder zweiten Verbindungseinrichtung als Anschlussjoch (74) ausgebildet ist und eine in Fahrtrichtung vordere und hintere Lagerstelle (76, 78) aufweist, wobei die vordere Lagerstelle (76) eine erste kreisförmige Öffnung und die hintere Lagerstelle (78) eine zweite kreisförmige Öffnung und eine Aussparung (80) aufweist und wobei die Aussparung (80) in einem Winkel zur Vertikalen der Bodenoberfläche angeordnet ist, und dass die entsprechend andere Verbindungseinrichtung als ein durch einen Steg (70) verbundener Anschlussbolzen (68) ausgebildet ist, wobei der Anschlussbolzen (68) derart bemessen ist, dass er zwischen und durch die erste und zweite kreisförmige Öffnung einfügbar ist und wobei der Steg (70) eine Dicke aufweist, die kleiner als die Breite der Aussparung (80) ist und in der Länge derart bemessen ist, dass er zwischen die vordere und hintere Lagerstelle (76, 78) einfügbar ist.

2. Kombination nach Anspruch 1, **dadurch gekennzeichnet, dass** die erste Verbindungseinrichtung das Anschlussjoch (74) und die zweite Verbindungseinrichtung den Anschlussbolzen (68) und den Steg (70) aufweisen.

3. Kombination nach einem der Ansprüche 1 oder 2, **dadurch gekennzeichnet, dass** der Winkel der Aussparung (80) größer ist als eine freie Schwenkbewegung der Schutzeinrichtung (34), wobei eine freie Schwenkbewegung der Schutzeinrichtung (34) durch angrenzende Bauteile (22a, 22b) der Sämaschine (10) begrenzt wird.

4. Kombination nach einem der vorhergehenden Ansprüche, **dadurch gekennzeichnet, dass** die Schutzeinrichtung (34) aus Stahl und der Rahmenteil (62) aus Eisen gefertigt ist.

5. Kombination nach einem der vorhergehenden Ansprüche, **dadurch gekennzeichnet, dass** die Verbindungseinrichtungen durch eine Verriegelungsverbindung manuell zusammenfügbar sind.

6. Kombination nach einem der vorhergehenden Ansprüche, **dadurch gekennzeichnet, dass** die erste und zweite Verbindungseinrichtung zuerst durch eine relative Gleitbewegung zueinander und dann durch eine Drehbewegung zueinander zusammenfügbar bzw. verriegelbar sind.

7. Kombination nach Anspruch 6, **dadurch gekennzeichnet, dass** eine reversierte Drehbewegung durch angrenzende Bauteile (22a, 22b) der Sämaschine (10) begrenzbar ist.

## Claims

1. Combination consisting of a guard (34) for a seed tube (20) for guiding the seed tube (20) through a furrow and a frame member (62) mountable to a seed planting machine (10), the guard (34) having a body for protecting the seed tube (20) and a first connecting means for mounting the guard (34) to the frame member (62), the frame member (62) having a second connecting means and the first and the second connecting means being mutually engageable, **characterized in that** one of the first or second connecting means is configured as a connection yoke (74) and has a front and rear journal (76, 78) in the direction of travel, the front journal (76) having a first circular opening and the rear journal (78) having a second circular opening and a gap (80) and the gap (80) being arranged at an angle to the vertical of the surface of the soil, and **in that** the correspondingly other connecting means is configured as a connection pin (68) which is connected by a neck (70), the dimensions of the connection pin (68) being such that it is insertable between and through the first and second circular openings and the neck (70) having a thickness which is smaller than the width of the gap (80) and having longitudinal dimensions such that it is insertable between the front and rear journals (76, 78).

2. Combination according to Claim 1, **characterized in that** the first connecting means has the connection yoke (74) and the second connecting means has the connection pin (68) and the neck (70).

3. Combination according to either Claim 1 or Claim 2, **characterized in that** the angle of the gap (80) is greater than a free swinging movement of the guard (34), a free swinging movement of the guard (34) being delimited by adjacent components (22a, 22b) of the seed planting machine (10).

4. Combination according to any one of the preceding claims, **characterized in that** the guard (34) is made of steel and the frame member (62) of iron.

5. Combination according to any one of the preceding claims, **characterized in that** the connecting means can be joined together manually by an interlocking connection.

6. Combination according to any one of the preceding claims, **characterized in that** the first and second connecting means can be joined together or engaged first by a relative sliding movement with respect to each other and then by a rotational movement with respect to each other.

7. Combination according to Claim 6, **characterized in that** a reversed rotational movement can be delimited by adjacent components (22a, 22b) of the seed planting machine (10).

## Revendications

1. Combinaison formée par un dispositif de protection (34) pour une conduite de semences (20) pour guider la conduite de semences (20) à travers un sillon, et un élément de châssis (62) qui peut être monté sur un semoir (10), le dispositif de protection (34) comportant un corps pour protéger la conduite de semences (20) et un premier dispositif d'assemblage pour monter le dispositif de protection (34) sur l'élément de châssis (62), ledit élément de châssis (62) comportant un deuxième dispositif d'assemblage et le premier et le deuxième dispositifs d'assemblage peuvent être amenés en prise l'un avec l'autre, **caractérisée en ce que** le premier ou le deuxième dispositif d'assemblage est réalisé sous forme de support d'assemblage (74) et comporte une zone d'appui avant et arrière (76, 78) dans le sens de déplacement, la zone d'appui avant (76) comportant une première ouverture circulaire et la zone d'appui arrière (78) comportant une deuxième ouverture circulaire et un évidement (80), et ledit évidement (80) étant disposé selon un angle par rapport à la verticale de la surface du sol, et **en ce que** l'autre dispositif d'assemblage correspondant est réalisé sous la forme d'un boulon d'assemblage (68) relié par une entretoise (70), ledit boulon d'assemblage (68) étant dimensionné de telle sorte qu'il peut être inséré entre et à travers la première et la deuxième ouverture circulaire, et l'entretoise (70) ayant une épaisseur qui est inférieure à la largeur de l'évidement (80) et est dimensionnée en longueur de telle sorte qu'elle peut être insérée entre la zone d'appui avant (76) et la zone d'appui arrière (78).

2. Combinaison selon la revendication 1, **caractérisée en ce que** le premier dispositif d'assemblage comporte le support d'assemblage (74) et le deuxième dispositif d'assemblage comporte le boulon d'assemblage (68) et l'entretoise (70).

3. Combinaison selon la revendication 1 ou 2, **caractérisée en ce que** l'angle de l'évidement (80) est supérieur à un mouvement de pivotement libre du dispositif de protection (34), un mouvement de pivotement libre du dispositif de protection (34) étant limité par des éléments adjacents (22a, 22b) du semoir (10).

4. Combinaison selon l'une quelconque des revendications précédentes, **caractérisée en ce que** le dispositif de protection (34) est réalisé en acier et l'élément de châssis (62) est réalisé en fer.

5. Combinaison selon l'une quelconque des revendications précédentes, **caractérisée en ce que** les dispositifs d'assemblage peuvent être assemblés manuellement par l'intermédiaire d'un assemblage verrouillé.

6. Combinaison selon l'une quelconque des revendications précédentes, **caractérisée en ce que** le premier et le deuxième dispositifs d'assemblage peuvent être assemblés et verrouillés l'un à l'autre d'abord par un mouvement de glissement relatif et ensuite par un mouvement de rotation l'un par rapport à l'autre.

7. Combinaison selon la revendication 6, **caractérisée en ce qu'**un mouvement de rotation inversé peut être limité par des éléments adjacents (22a, 22b) du semoir (10).
